# EUROPÄISCHE PATENTSCHRIFT

(11) **EP 3 404 151 B1**
(45) Veröffentlichungstag und Bekanntmachung des Hinweises auf die Patenterteilung: **24.02.2021**
(21) Anmeldenummer: 18160256.6
(22) Anmeldetag: 06.03.2018
(51) Int. Cl.: E03D 11/14, E03C 1/322, F16B 37/08

(54) **VORRICHTUNG ZUM BEFESTIGEN EINES SANITÄRGEGENSTANDES UND VERWENDUNG EINER SOLCHEN VORRICHTUNG**
DEVICE FOR FIXING A SANITARY OBJECT AND USE OF SAME
DISPOSITIF DE FIXATION D'UN OBJET SANITAIRE ET UTILISATION D'UN TEL DISPOSITIF

(30) Priorität: 17.05.2017 DE 102017110764
(43) Veröffentlichungstag der Anmeldung: 21.11.2018
(73) Patentinhaber: Viega Technology GmbH & Co. KG, 57439 Attendorn (DE)
(72) Erfinder: Rothstein, Gerhard, 42553 Velbert (DE); Schulte, Philipp, 57368 Lennestadt (DE)
(74) Vertreter: Cohausz & Florack

(56) Entgegenhaltungen:
- EP-A2- 1 990 547
- DE-A1- 19 958 627
- DE-C- 20 068
- FR-A- 1 070 804
- FR-A1- 2 874 040

## Beschreibung

Die Erfindung betrifft eine Vorrichtung zum Befestigen eines Sanitärgegenstandes, insbesondere eines Waschbeckens oder eines Montagegestells zur Halterung eines Sanitärgegenstandes, an einer Gebäudewand oder an einem Träger, mit einem bolzen- oder stangenförmigen Schraubelement, das zumindest entlang eines Längenabschnitts ein Außengewinde aufweist, und einem schraubenmutterartigen Gegenelement, wobei das Gegenelement aus einem kanalförmigen, ein Innenteilgewinde aufweisenden Verbindungsteil und einem Riegel zusammengesetzt ist, wobei das Verbindungsteil einen Freiraum aufweist, in den das Schraubelement radial verschiebbar ist, um das Schraubelement vom Innenteilgewinde zu lösen Die Erfindung betrifft des weiteren die Verwendung einer solchen Vorrichtung.

Eine ähnliche Vorrichtung ist aus der EP 1 260 639 B1 bekannt. Diese Wandhalterung genannte Vorrichtung umfasst eine Verbindungsstange, die an einem Ende an einem Montagegestell für Sanitärapparate befestigt wird, und ein Befestigungsteil, das am anderen Ende der Verbindungsstange angebracht und an einer Gebäudewand befestigt wird. Die Verbindungsstange und das Befestigungsteil sind mittels eines aufgesteckten Riegels, der als U-förmige Clipmutter ausgebildet ist, lösbar miteinander verbunden. Das Befestigungsteil weist hierzu einen Schaft mit glattwandigem Durchgang auf, in den das dem Montagegestell abgewandte Ende der Verbindungsstange eingesteckt wird. Der Schaft ist mit Öffnungen versehen, in welche die Clipmutter als Riegel eingesteckt und damit quer zur Längsachse der Verbindungsstange auf dieselbe aufgesteckt wird. Diese Vorrichtung ermöglicht eine schnelle Montage des Montagegestells mit einer Grobeinstellung der Montagetiefe und einer nachfolgenden Feinjustierung. Allerdings erscheint diese bekannte Wandhalterung hinsichtlich einer einfachen, für den Anwender leicht verständlichen Handhabung noch verbesserbar.

Die EP 1 990 547 A2, die den nächstkommenden Stand der Technik darstellt, zeigt ein Verbindungselement zur Montage von Leitungen,

Profilen oder anderen Gegenständen an Gebäudestrukturen. Das Verbindungselement besteht aus einem Körper mit einem rinnenförmigen Innengewinde zur Aufnahme einer Gewindestange sowie zwei axial beabstandeten Flanschen zur Aufnahme von Leitungen oder Profilen. Der Haltemechanismus beruht auf der Verwendung des rinnenförmigen Innengewindes mit mindestens einer Gewindestange und mindestens einem Riegel, wobei das Innengewinde derart ausgestaltet ist, dass die Gewindestange in dem Verbindungselement solange frei verschiebbar ist bis der Riegel durch eine Verschiebung in Axialrichtung der Gewindestangemittelachse die Gewindestange radial in eine Kontaktstellung mit dem rinnenförmigen Innengewinde des Verbindungselements verschiebt. Zusätzliche Rastelemente an dem Schieber greifen in dieser Schieberposition entweder in das Gewinde der Gewindestange oder in vorgesehene Bereiche des Verbindungselementes ein und verhindern dabei ein Lösen des Schiebers sowie der Kontaktstellung. Durch diesen Mechanismus lässt sich das Verbindungselement schnell Positionieren und Sichern. Jedoch kann weder eine manuelle Feineinstellung vorgenommen, noch die Kontaktstellung über eine umgekehrte Verschiebung des Schiebers gelöst werden.

Aus der DE 20068 C ist eine versetzbare Schraubenmutter bekannt. Jedoch bietet diese Schraubenmutter weder die Möglichkeit einer werkzeuglosen Feineinstellung noch die Möglichkeit, die Mutter an einem Montagegestell zu befestigen.

Die FR 2 874 040 A1 offenbart eine Vorrichtung zur Befestigung von C-förmigen Hohlprofilen an einer festen Tragstruktur, insbesondere für die Montage von Wandverkleidungen oder Zwischendecken. Dazu besitzt die Vorrichtung ein rinnenförmiges Innengewinde und einen Freiraum zur Aufnahme einer Gewindestange. Die Gewindestande kann dabei solange frei in der Vorrichtung bewegt werden, bis ein, durch einen Hebel betätigter, Nocken die Gewindestange in Kontaktstellung mit dem Innengewinde der Vorrichtung bringt. Somit ermöglicht die Vorrichtung eine schnelle Einstellung der Montagetiefe. Jedoch kann die Montagetiefe nicht mehr fein eingestellt werden, nachdem das Gewinde der Gewindestange in Kontaktstellung mit dem Innengewinde der Vorrichtung gebracht worden ist. Davon ausgehend liegt der Erfindung die Aufgabe zugrunde, eine Befestigungsvorrichtung der eingangs genannten Art zu schaffen, die kostengünstig herstellbar ist und ohne Werkzeug eine einfach zu bedienende Schnellverstellung bietet.

Gelöst wird diese Aufgabe durch eine Vorrichtung mit den im Anspruch 1 angegebenen Merkmalen. Bevorzugte und vorteilhafte Ausgestaltungen der erfindungsgemäßen Befestigungsvorrichtung sind in den Unteransprüchen angegeben.

Erfindungsgemäß ist der Riegel auf dem Verbindungsteil im Wesentlichen axial zur Längsachse des Schraubelements aus einer Nicht-Kontaktstellung in eine Kontaktstellung und umgekehrt verschiebbar, wobei der Riegel in der Kontaktstellung das Schraubelement in Eingriff mit dem Innenteilgewinde hält und wobei der Riegel als axialer Schieber zur Grobeinstellung und als Drehgriff zur manuellen Feineinstellung einer Montagetiefe bzw. einer Axialposition ausgeführt ist.

Die erfindungsgemäße Befestigungsvorrichtung lässt sich kostengünstig herstellen und kann ohne Werkzeug einfach und schnell eingestellt werden. Das Innenteilgewinde des kanalförmigen Verbindungsteils kann dabei auch aus mehreren Innenteilgewinden bestehen.

Das kanalförmige Verbindungsteil weist vorzugsweise einen hülsenförmigen Abschnitt auf, an den sich axial ein rinnenförmiger Abschnitt anschließt.

Der axial zur Längsachse des Schraubelements sowie zur Längsachse des kanalförmigen Verbindungsteils verschiebbare Riegel, der auch als Schieber bezeichnet werden kann, dient nicht nur der Grobeinstellung, sondern auch als Drehgriff zur manuellen Feineinstellung einer Montagetiefe bzw. Axialposition. Durch die besondere Ausführung des Riegels als axialer Schieber und Drehgriff erkennt und versteht der Anwender der erfindungsgemäßen Befestigungsvorrichtung schnell deren Funktionsweise. Die schnelle Erkennbarkeit der Funktionsweise kann zusätzlich durch eine entsprechende Form- und/oder Oberflächengestaltung des Riegels gesteigert werden. So sind auf dem Riegel vorzugsweise typische Griffflächen, z.B. Riffelungen, und/oder Symbole, z.B. Pfeile, vorzugsweise Doppelpfeile, und/oder Verriegelungs- und/oder Entriegelungssymbole vorgesehen oder ausgebildet. Eine schnelle Erkennbarkeit der Funktionsweise der erfindungsgemäßen Befestigungsvorrichtung kann beispielsweise auch durch eine unterschiedliche Farbgebung der Komponenten der Befestigungsvorrichtung, insbesondere von Riegel und kanalförmigem Verbindungsteil, optimiert werden.

Um den Riegel zuverlässig aus der Nicht-Kontaktstellung in die Kontaktstellung und umgekehrt bewegen zu können und in der jeweiligen Stellung relativ zu der Verbindungstange zu halten, weist das kanalförmige Verbindungsteil an seiner Außenseite vorzugsweise mindestens zwei radiale Absätze auf, die an entgegengesetzten Umfangsabschnitten des Verbindungsteils vorgesehen und voneinander axial beabstandet sind. In diesem Zusammenhang ist es des Weiteren vorteilhaft, wenn mindestens einer der Absätze, vorzugsweise der jeweilige Absatz, eine schräg zur Längsachse des kanalförmigen Verbindungsteils verlaufende Gleitkante oder Gleitfläche aufweist. Durch die Gleitkante oder Gleitfläche kann der Riegel einfacher aus der Nicht-Kontaktstellung in die Kontaktstellung und umgekehrt bewegt werden.

Nach einer weiteren bevorzugten Ausgestaltung des erfindungsgemäßen Befestigungssets ist der Rigel ring- oder hülsenförmig ausgebildet. Hierdurch kann eine spielfreie Anlage des dem bolzen- oder stangenförmigen Schraubelement zugewandten Kontaktabschnitts des Riegels an dem Außengewinde sichergestellt werden. Zudem bewirkt die Ausführung des Riegels als ring- oder hülsenförmiger Riegel, dass der Riegel unverlierbar oder nahezu unverlierbar auf dem kanalförmigen Verbindungsteil angeordnet ist. Der Riegel muss allerdings nicht zwingend eine geschlossene Ring- oder Hülsenform aufweisen. Vielmehr liegt es auch im Rahmen der Erfindung, den ring- oder hülsenförmigen Riegel in Form eines einen Axialschlitz aufweisenden Klemmringes oder einer entsprechend ausgebildeten Klemmhülse auszuführen.

Eine weitere vorteilhafte Ausgestaltung der erfindungsgemäßen Vorrichtung ist dadurch gekennzeichnet, dass das Innenteilgewinde des kanalförmigen Verbindungsteils als rinnenförmiges Teilgewinde ausgebildet ist. Das Innenteilgewinde des Verbindungsteils dient als Gegengewinde für das Außengewinde des bolzen- oder stangenförmigen Schraubelements. Wenn das Außengewinde mit dem rinnenförmigen Teilgewinde in Eingriff steht, kann durch Drehen des Schraubelements eine Feineinstellung beispielsweise der Montagetiefe eines Montagegestells vorgenommen werden. Das Innenteilgewinde kann auch als rinnenförmiger Gewindegrund bezeichnet werden. Ferner können das kanalförmige, das Innenteilgewinde aufweisende Verbindungsteil und der Riegel (Schieber) zusammen auch als zweiteilige Mutter bezeichnet werden.

Für einen zuverlässigen Eingriff des Außengewindes des bolzen- oder stangenförmigen Schraubelements in das rinnenförmige Innengewinde (Teilgewinde) des kanalförmigen Verbindungsteils ist es vorteilhaft, wenn gemäß einer weiteren Ausgestaltung der Erfindung der Riegel einen vorspringenden Kontaktabschnitt aufweist, welcher dem Schraubelement zugewandt ist. Durch den vorspringenden Kontaktabschnitt des Riegels lässt sich das Außengewinde des Schraubelements mit optimalem Druck gegen das Innenteilgewinde des kanalförmigen Verbindungsteils drücken, so dass sich ein sehr zuverlässiger Gewindeeingriff ergibt.

Hinsichtlich einer kompakten, platzsparenden Ausführung der erfindungsgemäßen Befestigungsvorrichtung ist es vorteilhaft, wenn entsprechend einer weiteren Ausgestaltung das kanalförmige Verbindungsteil einen rinnenförmigen Abschnitt aufweist, dessen Längsöffnung eine Axialführung für den Riegel definiert, wobei der vorspringende Kontaktabschnitt des Riegels in der Kontaktstellung in der Längsöffnung aufgenommen ist. Der rinnenförmige Abschnitt bzw. die Längsöffnung des kanalförmigen Verbindungsteils erstreckt sich vorzugsweise über mindestens die Hälfte der Länge des Verbindungsteils.

Eine weitere vorteilhafte Ausgestaltung der erfindungsgemäßen Befestigungsvorrichtung sieht vor, dass das kanalförmige Verbindungsteil an seiner Außenseite mindestens eine Vertiefung aufweist, in die ein mit dem Riegel verbundenes Rastelement einrastbar ist. Hierdurch lässt sich der Riegel in der Kontaktstellung gegen eine unbeabsichtigte Bewegung in die Nicht-Kontaktstellung oder umgekehrt arretieren.

Nach einer weiteren vorteilhaften Ausgestaltung der erfindungsgemäßen Vorrichtung weist das kanalförmige Verbindungsteil einen radial vorstehenden Befestigungsabschnitt auf, über den das Verbindungsteil formschlüssig an einer Durchgangsöffnung eines Montagegestells mit dem Montagegestell verbindbar ist. Vorzugsweise ist in dem Befestigungsabschnitt ein Spalt ausgebildet, in den ein Abschnitt einer Profilstange einbringbar ist. Der Spalt kann dabei durch zwei am kanalförmigen Verbindungsteil ausgebildete Flansche definiert sein. Beispielsweise kann der Befestigungsabschnitt des kanalförmigen Verbindungsteils mindestens einen im Wesentlichen ovalen oder nicht-kreisförmigen Flansch aufweisen, der durch eine entsprechend geformte Durchgangsöffnung des Montagegestells hindurchgeführt werden kann, wobei axial beabstandet zu dem Flansch, in Einführrichtung nachfolgend, ein weiterer Flansch oder Anschlag an dem Verbindungsteil ausgebildet ist. Nach Hindurchführen des im Wesentlichen ovalen oder nicht-kreisförmigen Flansches durch die entsprechend geformte Durchgangsöffnung des Montagegestells und durch Drehen des kanalförmigen Verbindungsteils, beispielsweise um 90°, ergibt sich in Zusammenwirkung mit dem weiteren Flansch oder Anschlag eine axiale Festlegung des kanalförmigen Verbindungsteils an dem Montagegestell.

Die Lehre der vorliegenden Erfindung beinhaltet zudem auch die Verwendung einer erfindungsgemäßen Vorrichtung, insbesondere in einer der oben angegebenen Ausgestaltungen, zum Befestigen eines Sanitärobjekts oder eines Montagegestells für ein oder mehrere Sanitärobjekte, beispielsweise für einen Spülkasten, eine WC-Schüssel und/oder ein Waschbecken, an einer Gebäudewand oder an einem Träger.

Nachfolgend wird die Erfindung anhand einer Ausführungsbeispiele darstellenden Zeichnung näher erläutert. Es zeigen:
- Fig. 1: ein Befestigungsset, das an einem oberen Abschnitt einer Hohlprofilstange eines Montagegestells befestigt ist und sich in einem entriegelten Zustand befindet, in einer perspektivischen Seitenansicht;
- Fig. 2: das Befestigungsset gemäß Fig. 1 in einer entsprechenden perspektivischen Seitenansicht, wobei jedoch Teile des Befestigungssets und der obere Abschnitt der Hohlprofilstange vertikal geschnitten dargestellt sind;
- Fig. 3: das Befestigungsset gemäß Fig. 1 in einer entsprechenden perspektivischen Seitenansicht, wobei sich das Befestigungsset in einem verriegelten Zustand befindet;
- Fig. 4: das Befestigungsset gemäß Fig. 3 in einer entsprechenden perspektivischen Seitenansicht, wobei jedoch Teile des Befestigungssets und der obere Abschnitt der Hohlprofilstange wiederum vertikal geschnitten dargestellt sind;
- Fig. 5 und 6: eine erfindungsgemäße Befestigungsvorrichtung in einer perspektivischen Seitenansicht, in einem entriegelten und einem verriegelten Zustand, wobei axial zueinander verschiebbare Teile der Vorrichtung jeweils axial geschnitten gezeigt sind;
- Fig. 7: die Vorrichtung aus Fig. 5 befestigt an einem oberen Abschnitt einer Hohlprofilstange, die vertikal geschnitten ist, ohne Gewindestange, in einer perspektivischen Seitenansicht;
- Fig. 8: die Teile aus Fig. 7 in einer Explosionsdarstellung; und
- Fig. 9: die Teile aus den Figuren 7 und 8 horizontal geschnitten, in einer weiteren perspektivischen Ansicht.

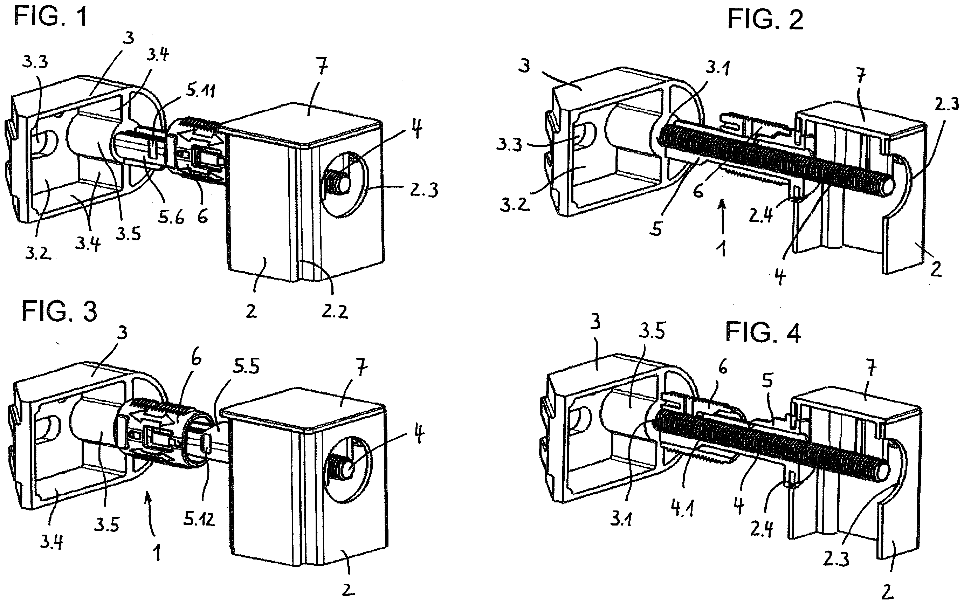

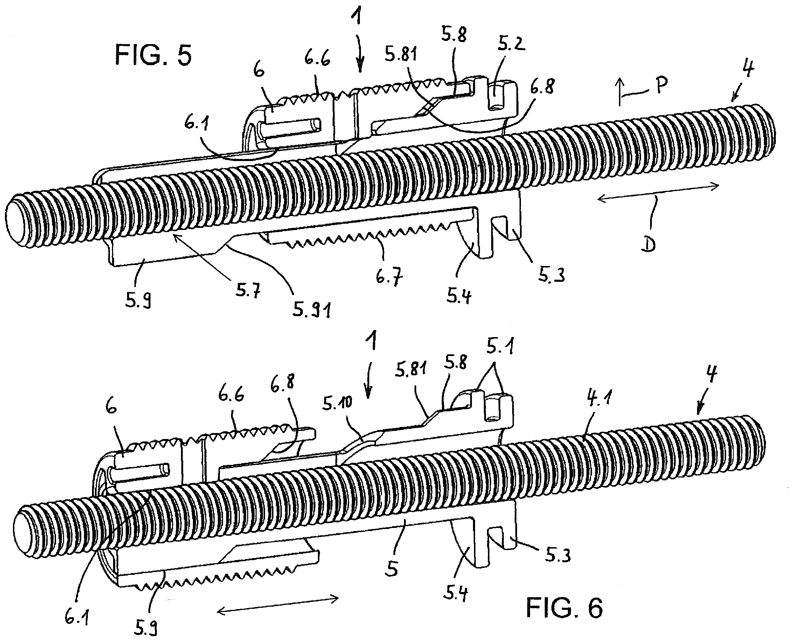

Die in der Zeichnung gezeigte erfindungsgemäße Vorrichtung 1 dient zum Befestigen eines Sanitärgegenstandes, beispielsweise eines Waschbeckens oder eines Montagegestells zur Halterung eines Sanitärgegenstandes, an einer Gebäudewand oder an einem Träger. Die erfindungsgemäße Befestigungsvorrichtung 1 ist insbesondere in den Figuren 5 und 6 gezeigt. Des Weiteren ist die erfindungsgemäße Vorrichtung in den Figuren 1 bis 4 und 7 bis 9 zusammen mit optionalen Teilen als Befestigungsset dargestellt. Die erfindungsgemäße Vorrichtung 1 kann jedoch zum Befestigen eines Sanitärgegenstandes oder dergleichen auch ohne bzw. mit anderen Teilen als den optionalen Teilen des Befestigungssets verwendet werden.

Von dem Montagegestell ist in der Zeichnung lediglich ein oberer Abschnitt einer vertikal auszurichtenden Hohlprofilstange 2 gezeigt. Das Montagegestell weist üblicherweise mindestens zwei vertikal auszurichtende Hohlprofilstangen 2 auf, die durch einen oder mehrere Querträger (Querstreben) miteinander verbunden sind. Die Hohlprofilstangen 2 können beispielsweise aus Vierkantrohren oder aus offenen Profilstangen, die im Querschnitt im Wesentlichen C-förmig ausgebildet sind, bestehen. Des Weiteren können die Hohlprofilstangen 2 an mindestens zwei ihrer benachbarten Längskanten ausgebildete Längsnuten 2.1, 2.2 aufweisen, die dem formschlüssigen Anklemmen eines Verbinders zum Befestigen einer oder mehrerer weiterer Hohlprofilstangen dienen.

Das Befestigungsset 1 ist aus einem an einer Gebäudewand zu befestigenden Befestigungsteil 3, einem bolzen- oder stangenförmigen Schraubelement 4, einem mit dem Montagegestell lösbar verbindbaren, kanalförmigen Verbindungsteil 5 und einem axial zur Längsachse des Schraubelements 4 bewegbaren Riegel 6 zusammengesetzt. Das Schraubelement 4 ist als Gewindestange ausgeführt. Sie besitzt zumindest über einen Längenabschnitt ein Außengewinde 4.1.

Jeweils am oberen Ende der vertikal auszurichtenden Hohlprofilstangen 2 des Montagegestells sind zwei gegenüberliegende Durchgangsöffnungen (Löcher) 2.3, 2.4 eingearbeitet, die der Befestigung des kanalförmigen Verbindungsteils 5 dienen. Das Verbindungsteil 5 weist hierzu einen Befestigungsabschnitt 5.1 auf, über den es formschlüssig mit dem Montagegestell verbindbar ist. Vorzugsweise ist der Befestigungsabschnitt 5.1 derart ausgebildet, dass über ihn das Verbindungsteil 5 mittels eines Steckteils 7 am Montagegestell axial festlegbar ist. Beispielsweise weist der Befestigungsabschnitt hierzu einen Spalt 5.2 auf, in den ein Abschnitt des Montagegestells, nämlich ein die Durchgangsöffnung 2.4 begrenzender Abschnitt der Hohlprofilstange 2 einbringbar ist. Der Spalt 5.2 ist durch zwei an dem kanalförmigen Verbindungsteil angeformte Flansche 5.3, 5.4 definiert.

Der am stirnseitigen Ende des kanalförmigen Verbindungsteils 5 angeordnete Flansch 5.3 ist vorzugsweise kreisförmig oder zylindrisch ausgebildet. Der dazu axial beabstandete Flansch 5.4 ist nicht-kreisförmig, beispielsweise oval ausgebildet. Der Spalt 5.2 oder axiale Abstand zwischen den beiden Flanschen 5.3, 5.4 entspricht der Wandstärke oder ist etwas größer als die Wandstärke der Hohlprofilstange 2.

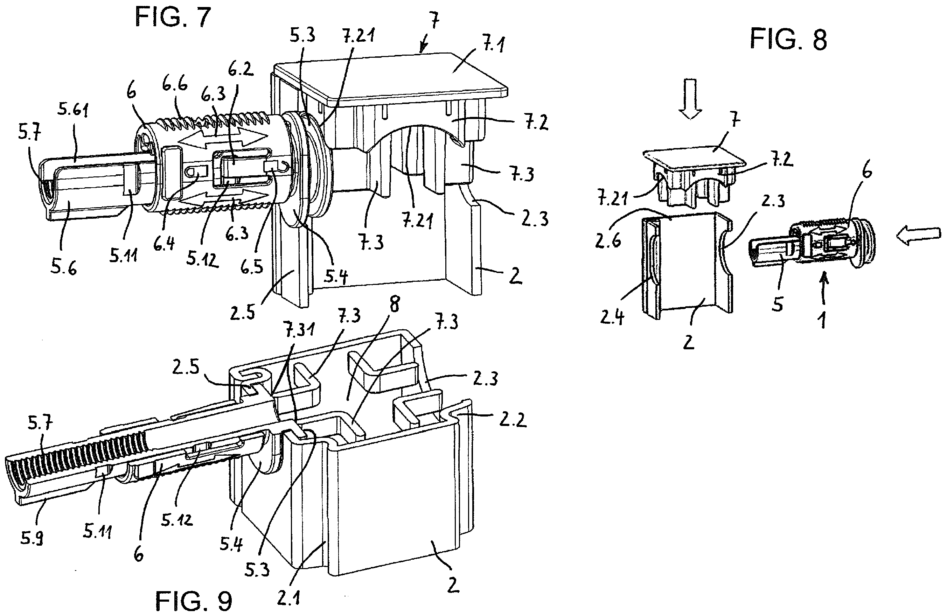

Die beiden Durchgangsöffnungen 2.3, 2.4 der Hohlprofilstange 2 sind ebenfalls unterschiedlich ausgebildet. Die Öffnung 2.3, die in der dem Raum zugewandten Hohlprofilstangenseite eingearbeitet ist, ist vorzugsweise als kreisrundes Loch ausgeführt, während die andere Öffnung 2.4, die in der der Gebäudewand zugewandten Hohlprofilstangenseite eingearbeitet ist, als ovales Loch ausgeführt ist. Die kleinste Innenweite des ovalen Lochs 2.4 ist deutlich kleiner als der Durchmesser der anderen Öffnung 2.3 und auch deutlich kleiner als der Außendurchmesser des kreisförmigen Flansches 5.3 des kanalförmigen Verbindungsteils. Die Durchgangsöffnungen 2.3, 2.4 sind so bemessen, dass das Verbindungsteil 5 über die kreisförmige Öffnung 2.3 hindurch soweit in die ovale Öffnung 2.4 eingeführt werden kann, bis der kreisförmige Flansch 5.3 an der Innenseite der die ovale Öffnung 2.4 aufweisenden Wandung 2.5 der Hohlprofilstange 2 anschlägt (vgl. Figuren 8 und 9). Der ovale Flansch 5.4 wird dabei durch das ovale Loch 2.4 hindurchgeführt und befindet sich dann an der Außenseite der Wandung 2.5.

Anschließend wird das Steckteil 7 von oben in die Hohlprofilstange 2 eingesteckt, um das kanalförmige Verbindungsteil 5 am Montagegestell axial festzulegen. Das Steckteil 7 ist vorzugsweise als Stopfen oder Kappe ausgebildet, um die obere Endöffnung 2.6 der Hohlprofilstange 2 zu verschließen. Das Steckteil 7, das auch als Verschlusskappe bezeichnet werden kann, weist einen deckelartigen Abschnitt 7.1 auf, dessen Oberseite vorzugsweise im Wesentlichen eben ausgebildet ist. An der Unterseite des deckelartigen Abschnitts 7.1 sind in die Hohlprofilstange 2 einsteckbare Vorsprünge 7.2, 7.3 ausgebildet. Einer dieser Vorsprünge ist beispielsweise in Form eines umlaufenden Kragens 7.2 ausgebildet, der vier im Wesentlichen rechtwinklig zueinander angeordnete Seitenabschnitte aufweist, wobei der jeweilige Seitenabschnitt eine konkave Einbuchtung 7.21 aufweist. In eine dieser Einbuchtungen 7.21 greift teilweise der kreisförmige Flansch 5.3 des Verbindungsteils 5 ein. Die Seitenabschnitte des Kragens 7.2 verlaufen im montierten Zustand der Verschlusskappe 7 nahe oder dicht an den Innenseiten der Hohlprofilstange 2 (vgl. Figuren 2 und 4).

Die anderen Vorsprünge 7.3 der Kappe 7 sind innerhalb des Kragens 7.2 angeordnet und ragen deutlich tiefer in die Hohlprofilstange 2 als der kragenförmige Vorsprung 7.2. Die Vorsprünge 7.3 weisen jeweils ein im Wesentlichen L- oder winkelförmiges Querschnittprofil auf. Sie begrenzen einen kreuzförmigen Durchgang (vgl. Fig. 9), wobei das bolzen- oder stangenförmige Schraubelement (Gewindestange) 4 im montierten Zustand des Befestigungssets 1 koaxial zu einer der sich kreuzenden Achsen des Durchgangs 8 verläuft. Die im montierten Zustand der Kappe 7 vertikal verlaufenden Kanten 7.31 zweier der Vorsprünge 7.3 liegen unmittelbar oder mit geringem Spiel an dem kreisförmigen Flansch 5.3 des eingesetzten Verbindungsteils an, so dass das Verbindungsteil 5.3 an dem Montagegestell bzw. der Hohlprofilstange 2 axial festgelegt ist.

Das an einer Gebäudewand anzubringende Befestigungsteil 3 weist ein Gewindeloch 3.1 auf, in welches das Schraubelement 4 einschraubbar ist. Das Befestigungsteil 3 besitzt einen plattenförmigen Abschnitt 3.2 mit einer Durchgangsöffnung 3.3 zum Anbringen einer Befestigungsschraube (nicht gezeigt), wobei der Kopf der Schraube im montierten Zustand vorzugsweise mit einer Unterlegscheibe an der Innenseite des Befestigungsteils 3 anliegt. Die Durchgangsöffnung 3.3 ist vorzugsweise als Langloch ausgebildet. Des Weiteren weist das Befestigungsteil 3 von dem plattenförmigen Abschnitt abstehende Stege 3.4 auf. Die Stege 3.4 schließen einen das Gewindeloch 3.1 zum Einschrauben des Schraubelements 4 aufweisenden Schraubdom 3.5 ein bzw. sind an den Schraubdom 3.5 angeformt. Das dem Montagegestell zugewandte Ende des Schraubdoms 3.5 sowie die dem Montagegestell zugewandten Kanten der Stege 3.4 schließen vorzugsweise im Wesentlichen flächenbündig zueinander ab.

Das Schraubelement (Gewindestange) 4 ist in dem kanalförmigen Verbindungsteil 5 axial verschiebbar geführt. Das Verbindungsteil 5 weist einen hülsenförmigen Abschnitt 5.5 auf, an den sich axial ein rinnenförmiger Abschnitt 5.6 anschließt. Die Flansche 5.3, 5.4 sind an dem hülsenförmigen Abschnitt 5.5 angeordnet. Das Verbindungsteil 5 hat entlang seines hülsenförmigen Abschnitts 5.5 eine ovale Innenquerschnittsfläche. Die Innenseite des hülsenförmigen Abschnitts 5.5 ist vorzugsweise glatt oder im Wesentlichen glatt ausgebildet. Die kleinste Innenweite der ovalen Innenquerschnittsfläche des hülsenförmigen Abschnitts 5.5 ist größer als der Außendurchmesser des Gewindes 4.1 des Schraubelements 4. Der rinnenförmige Abschnitt 5.6 des Verbindungsteils weist innenseitig ein rinnenförmiges Innenteilgewinde 5.7 auf (vgl. Fig. 5, 7 und 9). Das Innenteilgewinde 5.7 ist passend zu dem Außengewinde 4.1 des Schraubelements ausgebildet. Durch eine bestimmte Radialverschiebung bzw. ein Absenken des am Montagegestell axial festgelegten Verbindungsteils 5 gegenüber dem am Befestigungsteil 3 befestigten Schraubelement 4 um ein Maß, das beispielsweise in der Größenordnung von 2 bis 4 mm liegt, können das rinnenförmige Innenteilgewinde 5.7 des Verbindungsteils und das Außengewinde 4.1 des Schraubelements außer Eingriff gebracht und das Verbindungsteil 5 sodann entlang des Schraubelements 4 axial verschoben werden. Die besagte Radialverschiebung und die axiale Verschiebung sind in Fig. 5 durch einen kleinen vertikalen Pfeil P bzw. einen Doppelpfeil D angedeutet.

Auf dem kanalförmigen Verbindungsteil 5 sitzt der als Schieber ausgebildete Riegel 6. Er ist axial zur Längsachse des Verbindungsteils 5 aus einer Nicht-Kontaktstellung in eine Kontaktstellung und umgekehrt verschiebbar und weist einen dem bolzen- oder stangenförmigen Schraubelement 4 zugewandten Kontaktabschnitt 6.1 auf, der in der Kontaktstellung am Außengewinde 4.1 des Schraubelements anliegt. Der Kontaktabschnitt 6.1 des Riegels ist als Vorsprung ausgebildet. Die Längsöffnung 5.61 des rinnenförmigen Abschnitts 5.6 des Verbindungsteils definiert eine Axialführung für den Riegel 6, wobei der Kontaktabschnitt 6.1 des Riegels in der Verriegelungsstellung in der Längsöffnung 5.61 aufgenommen ist.

In den Figuren 2 und 4 bis 6 ist gut zu erkennen, dass das kanalförmige Verbindungsteil 5 an seiner Außenseite zwei radiale Absätze 5.8, 5.9 aufweist, die an entgegengesetzten Umfangsabschnitten des Verbindungsteils 5 angeordnet und axial voneinander beabstandet sind. Beide Absätze 5.8, 5.9 haben jeweils eine schräg zur Längsachse des Verbindungsteils 5 verlaufende Gleitkante oder Gleitfläche 5.81, 5.91. Die beiden Gleitkanten bzw. Gleitflächen 5.81, 5.91 sind an einander zugewandten Enden der beiden Absätze 5.8, 5.9 ausgebildet. Zudem ist am Übergang zwischen dem rinnenförmigen Abschnitt 5.6 und dem hülsenförmigen Abschnitt 5.5, und zwar am Rand der Längsöffnung 5.61 eine schräg zur Längsachse des Verbindungsteils 5 verlaufende Gleitkante oder Gleitfläche 5.10 ausgebildet.

Der Riegel 6 weist innenseitig eine den Gleitkanten oder Gleitflächen 5.81, 5.10 zugeordnete Gleitkante oder Gleitfläche 6.8 auf, die ebenfalls schräg zur Längsachse des Riegels 6 bzw. des Verbindungsteils 5 verläuft.

Des Weiteren besitzt das kanalförmige Verbindungsteil 5 an seiner Außenseite axial voneinander beabstandete Vertiefungen 5.11, 5.12, denen ein mit dem Riegel 6 verbundenes Rastelement 6.2 zugeordnet ist. Das Rastelement 6.2 ist beispielsweise in Form einer federelastischen Rastlasche ausgebildet. Es rastet in zwei verschiedenen Positionen des Riegels 6 relativ zu dem Verbindungsteil 5 in eine der beiden Vertiefungen 5.11, 5.12 ein. Die Vertiefungen 5.11, 5.12 sind einerseits einem Entriegelungszustand und andererseits einem Verriegelungszustand zugeordnet. Die möglichen Bewegungsrichtungen des Riegels 6 sind durch eingeprägte oder aufgedruckte Doppelpfeile 6.3 markiert. Zudem ist der Riegel 6 mit zwei Symbolen 6.4, 6.5 versehen, welche ein geschlossenes und ein geöffnetes Bügelschloss symbolisieren und in Kombination mit den Doppelpfeilen 6.3 die Verschieberichtung zur Einstellung des Entriegelungszustandes bzw. des Verriegelungszustandes anzeigen. Darüber hinaus weist der Riegel 6 auf seiner Außenfläche zwei entgegengesetzt angeordnete Rippenflächen 6.6, 6.7 auf, die als rutschhemmende Griffflächen die manuelle, werkzeuglose Verschiebung des Riegels 6 erleichtern.

In der Verriegelungsstellung bildet der Riegel 6 zusammen mit dem kanalförmigen Verbindungsteil 5 eine (zweiteilige) Mutter. In dieser Stellung kann der Riegel 6 zusammen mit dem Verbindungsteil 5 um die Längsachse des Schraubelements 4 gedreht werden und damit eine Feineinstellung der Montagetiefe des Montagegestells vorgenommen werden. Für eine schnelle Grobeinstellung der Montagetiefe wird der Riegel 6 in die Entriegelungsstellung geschoben und dabei der Eingriff des Innenteilgewindes 5.7 des Verbindungsteils 5 in das Außengewinde 4.1 des Schraubelements 4 durch eine Radialbewegung des Verbindungsteils 5 gelöst. Sodann können das Schraubelement (Gewindestange) 4 und das kanalförmige Verbindungsteil 5 relativ zueinander axial verschoben und damit die Montagetiefe des Montagegestells schnell und grob eingestellt werden. Danach werden das Innenteilgewinde 5.7 des Verbindungsteils und das Außengewinde 4.1 des Schraubelements durch eine umgekehrte Radialbewegung des Verbindungsteils 5 wieder in Eingriff gebracht und durch Verschiebung des Riegels 6 in die Verriegelungsstellung verriegelt. Bei Bedarf kann dann durch Drehen des Riegels 6 zusammen mit dem damit verriegelten Verbindungsteil 5 um die Längsachse des Schraubelements 4 eine Feineinstellung der Montagetiefe vorgenommen werden.

Die Ausführung der Erfindung ist nicht auf die in der Zeichnung dargestellten Ausführungsbeispiele beschränkt. Vielmehr sind verschiedene Modifikationen möglich, die auch bei einer von den gezeigten Beispielen abweichenden Gestaltung von der in den Ansprüchen angegebenen Erfindung Gebrauch machen. So kann beispielsweise der Flansch 5.4 des Verbindungsteils 5 auch weggelassen werden.

## Patentansprüche

1. Vorrichtung (1) zum Befestigen eines Sanitärgegenstandes, insbesondere eines Waschbeckens oder eines Montagegestells zur Halterung eines Sanitärgegenstandes, an einer Gebäudewand oder an einem Träger, mit
einem bolzen- oder stangenförmigen Schraubelement (4), das zumindest entlang eines Längenabschnitts ein Außengewinde (4.1) aufweist, und
einem schraubenmutterartigen Gegenelement,
wobei das Gegenelement aus einem kanalförmigen, ein Innenteilgewinde (5.7) aufweisenden Verbindungsteil (5) und einem Riegel (6) zusammengesetzt ist,
wobei das Verbindungsteil (5) einen Freiraum aufweist, in den das Schraubelement (4) radial verschiebbar ist, um das Schraubelement (4) vom Innenteilgewinde (5.7) zu lösen,
wobei der Riegel (6) auf dem Verbindungsteil im Wesentlichen axial zur Längsachse des Schraubelements (4) aus einer Nicht-Kontaktstellung in eine Kontaktstellung und umgekehrt verschiebbar ist,
wobei der Riegel (6) in der Kontaktstellung das Schraubelement (4) in Eingriff mit dem Innenteilgewinde (5.7) hält, und
wobei der Riegel (6) als zur Längsachse des Schraubelements (4) axialer Schieber zur Grobeinstellung und als Drehgriff zur manuellen Feineinstellung einer Montagetiefe bzw. einer Axialposition ausgeführt ist.

2. Vorrichtung nach Anspruch 1, **dadurch gekennzeichnet, dass** das kanalförmige Verbindungsteil (5) an seiner Außenseite mindestens zwei radiale Absätze (5.8, 5.9) aufweist, die an entgegengesetzten Umfangsabschnitten des Verbindungsteils (5) vorgesehen und voneinander axial beabstandet sind.

3. Vorrichtung nach Anspruch 2, **dadurch gekennzeichnet, dass** mindestens einer der Absätze (5.8, 5.9) eine schräg zur Längsachse des Verbindungsteils (5) verlaufende Gleitkante oder Gleitfläche (5.81, 5.91) aufweist.

4. Vorrichtung nach einem der Ansprüche 1 bis 3, **dadurch gekennzeichnet, dass** der Riegel (6) ring- oder hülsenförmig ausgebildet ist.

5. Vorrichtung nach einem der Ansprüche 1 bis 4, **dadurch gekennzeichnet, dass** das Innenteilgewinde (5.7) des kanalförmigen Verbindungsteils (5) als rinnenförmiges Teilgewinde ausgebildet ist.

6. Vorrichtung nach einem der Ansprüche 1 bis 5, **dadurch gekennzeichnet, dass** der Riegel (6) einen vorspringenden Kontaktabschnitt (6.1) aufweist, welcher dem bolzen- oder stangenförmigen Schraubelement (4) zugewandt ist.

7. Vorrichtung nach Anspruch 6, **dadurch gekennzeichnet, dass** das kanalförmige Verbindungsteil (5) einen rinnenförmigen Abschnitt (5.6) mit einer Längsöffnung (5.61) aufweist, die eine Axialführung für den Riegel (6) definiert, wobei der vorspringende Kontaktabschnitt (6.1) des Riegels (6) in der Kontaktstellung in der Längsöffnung (5.61) aufgenommen ist.

8. Vorrichtung nach einem der Ansprüche 1 bis 7, **dadurch gekennzeichnet, dass** das kanalförmige Verbindungsteil (5) an seiner Außenseite mindestens eine Vertiefung (5.11, 5.12) aufweist, in die ein mit dem Riegel (6) verbundenes Rastelement (6.2) einrastbar ist.

9. Vorrichtung nach einem der Ansprüche 1 bis 8, **dadurch gekennzeichnet, dass** das kanalförmige Verbindungsteil (5) einen radial vorstehenden Befestigungsabschnitt (5.1) aufweist, über den das Verbindungsteil (5) formschlüssig an einer Durchgangsöffnung eines Montagegestells mit dem Montagegestell verbindbar ist.

10. Vorrichtung nach Anspruch 9, **dadurch gekennzeichnet, dass** der Befestigungsabschnitt (5.1) einen Spalt (5.2) aufweist, in den ein Abschnitt einer Profilstange (2) einbringbar ist.

11. Vorrichtung nach Anspruch 10, **dadurch gekennzeichnet, dass** der Spalt (5.2) durch zwei am kanalförmigen Verbindungsteil (5) ausgebildete Flansche (5.3, 5.4) definiert ist.

12. Verwendung einer Vorrichtung (1) nach einem der Ansprüche 1 bis 11 zum Befestigen eines Sanitärobjekts oder eines Montagegestells für ein oder mehrere Sanitärobjekte, insbesondere für einen Spülkasten, eine WC-Schüssel und/oder ein Waschbecken, an einer Gebäudewand.

## Claims

1. Device (1) for fastening a sanitary object, in particular a wash basin or a mounting frame for holding a sanitary object, to a building wall or to a support, comprising
a bolt-shaped or rod-shaped screw element (4), which has an external thread (4.1) at least along a length section, and
a screw-nut type counter element,
wherein the counter element is composed of a channel-shaped connecting part (5) having an internal partial thread (5.7) and a latch (6),
wherein the connecting part (5) has a free space into which the screw element (4) is radially displaceable in order to release the screw element (4) from the internal partial thread (5.7),
the latch (6) being displaceable on the connecting part substantially axially to the longitudinal axis of the screw element (4) from a non-contact position to a contact position and vice versa,
wherein the latch (6) in the contact position holds the screw element (4) in engagement with the internal partial thread (5.7), and
wherein the latch (6) is designed as an axial slide, which is axial to the longitudinal axis of the screw element (4), for coarse adjustment and as a rotary handle for manual fine adjustment of an mounting depth or an axial position.

2. Device according to claim 1, **characterized in that** the channel-shaped connecting part (5) has at least two radial shoulders (5.8,5.9) on its outside, which are provided on opposite circumferential sections of the connecting part (5) and are axially spaced from each other.

3. Device according to claim 2, **characterized in that** at least one of the shoulders (5.8,5.9) has a sliding edge or sliding surface (5.81, 5.91) extending obliquely to the longitudinal axis of the connecting part (5).

4. Device according to any one of claims 1 to 3, **characterised in that** the latch (6) is designed in the form of a ring or sleeve.

5. Device according to any one of claims 1 to 4, **characterised in that** the internal partial thread (5.7) of the channel-shaped connecting part (5) is formed as a channel-shaped partial thread.

6. Device according to any one of claims 1 to 5, **characterised in that** the latch (6) has a projecting contact section (6.1) which faces the bolt-shaped or rod-shaped screw element (4).

7. Device according to claim 6, **characterized in that** the channel-shaped connecting part (5) has a channel-shaped section (5.6) with a longitudinal opening (5.61) which defines an axial guide for the latch (6), the projecting contact section (6.1) of the latch (6) being received in the longitudinal opening (5.61) in the contact position.

8. Device according to any one of claims 1 to 7, **characterized in that** the channel-shaped connecting part (5) has at least one recess (5.11, 5.12) on its outside, into which a latching element (6.2) connected to the latch (6) can be latched.

9. Device according to any one of claims 1 to 8, **characterized in that** the channel-shaped connecting part (5) has a radially projecting fastening section (5.1), via which the connecting part (5) can be connected to a mounting frame in a form-fitting manner at a passage opening of the mounting frame.

10. Device according to claim 9, **characterized in that** the fastening section (5.1) has a gap (5.2) into which a section of a profile rod (2) can be inserted.

11. Device according to claim 10, **characterized in that** the gap (5.2) is defined by two flanges (5.3, 5.4) formed on the channel-shaped connecting part (5).

12. Use of a device (1) according to any one of claims 1 to 11 for fastening a sanitary object or a mounting frame for one or more sanitary objects, in particular for a cistern, a toilet bowl and/or a washbasin, to a building wall.

## Revendications

1. Dispositif (1) de fixation d'un objet sanitaire, notamment un lavabo ou un châssis de montage, destiné à maintenir un objet sanitaire sur un mur de bâtiment ou sur un support, avec
un élément de vissage en forme de barre ou de boulon (4), lequel présente, au moins le long d'une section longitudinale, un filetage extérieur (4.1), et
un élément opposé de type écrou,
l'élément opposé étant constitué d'un élément de raccordement en forme de canal (5) présentant un filetage partiel intérieur (5.7) et d'un verrou (6), l'élément de raccordement (5) présentant un espace libre, dans lequel l'élément de vissage (4) est susceptible d'être déplacé radialement afin de détacher l'élément de vissage (4) du filetage partiel intérieur (5.7),
le verrou (6) étant susceptible d'être déplacé sur l'élément de raccordement, essentiellement axialement par rapport à l'axe longitudinal de l'élément de vissage (4), d'une position de non contact en une position de contact et inversement,
le verrou (6), dans la position de contact, maintenant l'élément de vissage (4) en prise avec le filetage partiel intérieur (5.7), et
le verrou (6) étant réalisé en tant que coulisseau axial par rapport à l'axe longitudinal de l'élément de vissage (4) pour un réglage approximatif et en tant que poignée tournante pour un réglage de précision manuel d'une profondeur de montage ou d'une position axiale.

2. Dispositif selon la revendication 1, **caractérisé en ce que** l'élément de raccordement en forme de canal (5) présente, sur son côté extérieur, au moins deux gradins radiaux (5.8, 5.9), lesquels sont prévus sur des sections périphériques opposées de l'élément de raccordement (5) et étant espacés axialement l'un de l'autre.

3. Dispositif selon la revendication 2, **caractérisé en ce qu'**au moins un des gradins (5.8, 5.9) présente une arête de glissement ou une surface de glissement (5.81, 5.91) passant obliquement par rapport à l'axe longitudinal de l'élément de raccordement (5).

4. Dispositif selon l'une des revendications 1 à 3, **caractérisé en ce que** le verrou (6) est conçu en forme de douille ou d'anneau.

5. Dispositif selon l'une des revendications 1 à 4, **caractérisé en ce que** le filetage partiel intérieur (5.7) de l'élément de raccordement en forme de canal (5) est conçu en tant que filetage partiel en forme de rigole.

6. Dispositif selon l'une des revendications 1 à 5, **caractérisé en ce que** le verrou (6) présente une section de contact saillante (6.1), laquelle est tournée vers l'élément de vissage (4) en forme de boulon ou de barre.

7. Dispositif selon la revendication 6, **caractérisé en ce que** l'élément de raccordement en forme de canal (5) présente une section en forme de rigole (5.6) avec une ouverture longitudinale (5.61), laquelle définit un guidage axial pour le verrou (6), la section de contact saillante (6.1) du verrou (6) étant logée, en position de contact, dans l'ouverture longitudinale (5.61).

8. Dispositif selon l'une des revendications 1 à 7, **caractérisé en ce que** l'élément de raccordement en forme de canal (5) présente, sur son côté extérieur, au moins une cavité (5.11, 5.12), dans laquelle un élément d'encliquetage (6.2) relié au verrou (6) peut être engagé.

9. Dispositif selon l'une des revendications 1 à 8, **caractérisé en ce que** l'élément de raccordement en forme de canal (5) présente une section de fixation (5.1) faisant saillie radialement, à travers laquelle l'élément de raccordement (5) est susceptible d'être relié, par liaison de forme, au niveau d'une ouverture de passage d'un châssis de montage, au châssis de montage.

10. Dispositif selon la revendication 9, **caractérisé en ce que** la section de fixation (5.1) présente une fente (5.2), dans laquelle une section d'une barre profilée (2) peut être introduite,

11. Dispositif selon la revendication 10, **caractérisé en ce que** la fente (5.2) est définie par deux brides (5.3, 5.4) conçues sur l'élément de raccordement en forme de canal (5).

12. Utilisation d'un dispositif (1) selon l'une des revendications 1 à 11 pour la fixation d'un objet sanitaire ou d'un châssis de montage pour un ou plusieurs objets sanitaires, notamment pour un réservoir de chasse d'eau, une cuvette de WC et/ou un lavabo, sur un mur de bâtiment.
